**Europäisches Patentamt**

**European Patent Office**

**Office européen des brevets**

(19)

(11) Veröffentlichungsnummer : **0 349 789 B1**

(12)

# EUROPÄISCHE PATENTSCHRIFT

(45) Veröffentlichungstag der Patentschrift :
**21.10.92 Patentblatt 92/43**

(51) Int. Cl.$^5$ : **E02D 31/00**

(21) Anmeldenummer : **89110399.6**

(22) Anmeldetag : **08.06.89**

(54) **Verfahren und Vorrichtung zur Sanierung kontaminierter Standorte.**

(30) Priorität : **05.07.88 DE 3822747**
**10.01.89 DE 3900513**

(43) Veröffentlichungstag der Anmeldung :
**10.01.90 Patentblatt 90/02**

(45) Bekanntmachung des Hinweises auf die
Patenterteilung :
**21.10.92 Patentblatt 92/43**

(84) Benannte Vertragsstaaten :
**AT BE CH DE FR GB IT LI LU NL**

(56) Entgegenhaltungen :
**WO-A-87/03319**
**FR-A- 703 845**
**FR-A- 2 384 720**
**GB-A- 796 959**
**GB-A- 965 372**
**US-A- 2 403 643**

(73) Patentinhaber : **KELLER GRUNDBAU GmbH**
**Kaiserleistrasse 44**
**W-6050 Offenbach 3 (DE)**

(72) Erfinder : **Netzel, Wolfgang, Dipl.-Ing.**
**Auf dem Ast 29**
**W-2107 Rosengarten (DE)**
Erfinder : **Sondermann, Wolfgang, Dipl.-Ing.Dr.**
**Tannenstrasse 9**
**W-6057 Dietzenbach-Steinberg (DE)**
Erfinder : **Pielsticker, Albert, Dipl.-Ing.**
**Olenpütteler Strasse 14**
**W-2114 Appel-Ewersen (DE)**

(74) Vertreter : **Zeitler, Giselher, Dipl.-Ing.**
**Postfach 26 02 51**
**W-8000 München 26 (DE)**

**Beschreibung**

Die Erfindung betrifft ein Verfahren zur Sanierung kontaminierter Standorte gemäß dem Oberbegriff des Anspruchs 1 sowie eine zur Durchführung dieses Verfahrens vorgesehene Vorrichtung gemäß dem Oberbegriff des Anspruchs 8.

Um kontaminierte Standorte zu sanieren, ist schon ein Verfahren bekannt (DE-PS 33 30 897), bei dem die Einschließung von Deponien mit Hilfe einer hydraulischen Räum- und Injektionseinrichtung erfolgt.

Durch dieses an sich sehr bewährte Verfahren ist es jedoch nicht möglich, einen kontaminierten Boden an gezielter Stelle zu extrahieren, wirkungsvoll von den anhaftenden Schadstoffen zu reinigen und sodann den gereinigten Boden im sanierten Standort wieder abzulagern.

Es ist bereits ein Verfahren zur Verbesserung von Erdschichten bekannt (GB-A-796 959), das im wesentlichen dazu dient, im Erdboden pfahlähnliche Strukturen zu erzeugen, indem eine Bohrung angebracht wird, um deren Achse anschließend dann ein Spülstrom aus Vergußmaterial rotiert. Bei der zur Durchführung dieses bekannten Verfahrens verwendeten Vorrichtung, eine Hochdruckpumpe über Leitungen mit einem Rohr in Verbindung, an dessen unterem Ende sich ein Kopf mit einer Spülöffnung befindet. Koaxial hierzu ist ein weiteres Rohr vorgesehen, an dessen einem Ende eine Vakuumpumpe angeordnet ist. Eine Leitung führt vom Auslab der Vakuumpumpe zu Absetzbecken, in denen grobe und kleine Bodenbestandteile getrennt werden. Über einen Tank kann dem in den Boden zurückgeführten Spülstrom zur Verbesserung der Festigkeit des Bodens Zement beigemischt werden.

Demgegenüber liegt der Erfindung die Aufgabe zugrunde, ein Verfahren sowie eine Vorrichtung zu schaffen, mittels denen der kontaminierte Boden wirkungsvoll herausgelöst und durch gereinigten Boden ersetzt wird, wobei gleichzeitig die Bodenluft dekontaminiert werden soll. Außerdem soll, daß die Wirksamkeit des Transports der noch die Schadstoffe enthaltenden Bodenfeinbestandteile zur Reinigungsanlage weiter gesteigert wird, und zwar unter gleichzeitiger Gewährleistung einer zufriedenstellenden Dichtheit des Transportsystems. Schließlich sollen die Möglichkeiten zum Schadstoffabbau, insbesondere bereits beim Herauslösen des kontaminierten Bodens, vergröbert werden.

Das erfindungsgemäß geschaffene Verfahren löst diese Aufgabe mit den Merkmalen des Anspruchs 1. Vorteilhafte Ausgestaltungen hiervon sind in den Ansprüchen 2 bis 7 angegeben.

Die zur Durchführung dieses Verfahrens geschaffene Vorrichtung gemäß der Erfindung ist durch die Merkmale des Anspruchs 8 gekennzeichnet. Zweckmäßige Ausgestaltungen hiervon sind in den weiteren Ansprüchen beschrieben.

Das erfindungsgemäße Verfahren stellt einen wesentlichen Beitrag zur Sanierung von Deponien und Altlasten dar. Dieser besteht darin, daß der belastete Boden mit Hilfe eines Hochdruckspül- und -schneidstrahles gewaschen und dadurch von Giftstoffen weitgehend befreit wird.

Der durchspülte und vorgereinigte feinkörnige Bodenanteil wird im Rückstrom an die Oberfläche zur Nachbehandlung gefördert, während der Grobanteil des Bodens im Behandlungsbereich verbleibt.

Bei dem Verfahren gemäß der Erfindung wird die an sich bekannte Schneideinrichtung zur noch im Boden selbst erfolgenden vorteilhaften Vorreinigung des kontaminierten Bodens verwendet. Der feinkörnige Bodenanteil des durchspülten und vorgereinigten Bodens wird in einer Reinigungsanlage von den restlichen Schadstoffen befreit und unter Zugabe von Bindemittel, beispielsweise Zement, in die Bohrung zurückgespült. Dort bildet sich eine tragfähige Bodenstruktur aus dem mit dem Bindemittel vermischten gereinigten Feinanteil des Bodens zusammen mit dem im Boden verbliebenen gereinigten Grobanteil einschließlich Wasser aus.

Das erfindungsgemäße Verfahren weist den weiteren Vorteil auf, daß mit Hilfe der Schneideinrichtung auch die Reinigung des Bodens von gasförmigen Giften erreicht werden kann. Dies kann in erfindungsgemäßer Ausgestaltung des Verfahrens durch Zugabe von Luft und/oder Gas zum Injektionsmittel des Spül- und Schneidstrahles erreicht werden.

Die Vorreinigung des Bodens kann weiter dadurch verstärkt werden, daß dem Injektionsmittel des Spül- und Schneidstrahles heißes Wasser und/oder Dampf beigemischt wird. Dadurch kann der Dekontaminationsgrad wesentlich gesteigert werden.

Ein weiterer besonderer Vorteil des erfindungsgemäßen Verfahrens besteht darin, daß alle Vorgänge zur Dekontaminierung des Bodens durch eine Meß- und Regelanlage kontrolliert und geregelt werden können.

Die Erfindung hat den weiteren Vorteil, daß der Vorgang der Dekontaminierung so lange fortgesetzt werden kann, bis der vorgesehene Dekontaminationsgrad des Bodens bei dessen voller Tragfähigkeit erreicht ist.

Durch die Ausbildung der erfindungsgemäßen Vorrichtung ist es mit Hilfe des Hochdruckspül- und -schneidstrahles möglich, den mit Schadstoffen belasteten Boden aus seinem Verband herauszulösen und damit den Vorgang der Entgiftung einzuleiten. Erfindungsgemäß kann die Wirksamkeit des Transports des bereits vorgereinigten, jedoch nach wie vor Schadstoffe enthaltenden Bodens zur Reinigungsanlage dadurch wirksam gesteigert werden, daß der im Rückstrom angeordnete Preventer zum Ansaugen der Schadstoffe unter Unterdruck gesetzt wird.

Ein derartiger Preventer stellt, wie bekannt, einen gas- und wasserdichten Bohrlochverschluß mit einer Einrichtung zur Gestängedurchführung und einer verschließbaren, regulierbaren Öffnung dar. Dieser im Preventer erzeugte und beibehaltene Unterdruck erbringt außer der geleisteten Transporthilfe den weiteren wesentlichen Vorteil, daß die im Feinanteil des durchgeschleusten Bodens in gasförmigem Zustand enthaltenen Schadstoffe im Inneren des Preventers gehalten werden und nicht nach außen in die Atmosphäre entweichen können, sondern stattdessen zusammen mit dem durchgeschleusten Bodenfeinanteil der Reigniungsanlage zugeführt werden. Auf diese Weise wird der erwünschte Arbeits- und Emissionsschutz zu jedem beliebigen Zeitpunkt sichergestellt.

Der erzielte Sanierungserfolg wird durch die in der Vorrichtung vorgesehene Meß- und Regelanlage garantiert. Dadurch ist es möglich, den Grad der Dekontaminierung zu jedem Zeitpunkt zu kontrollieren, zu registrieren und zu regeln.

Wenn, wie erfindungsgemäb möglich, an den im Rückstrom angeordneten Preventer eine Vakuumpumpe angeschlossen ist, saugt diese konstant die Schadstofffe an, so daß das Baustellenpersonal und die Umwelt vor den im Bodenfeinanteil noch enthaltenen Schadstoffen geschützt werden.

Der Vorgang der Ausspülung der Schadstoffe kann durch Zugabe von Luft und/oder Gas verstärkt werden, wofür im Leitungssystem der die Schneideinrichtung antreibenden Hochdruckpumpe entsprechende Anschlüsse vorgesehen sind.

Ein weiterer Vorteil zur Herauslösung der Schadstoffe besteht nach der Erfindung darin, daß im Leitungssystem der die Schneideinrichtung antreibenden Hochdruckpumpe Anschlüsse für heißes Wasser und/oder Dampf vorgesehen sind.

Die Erfindung weist schließlich den wesentlichen Vorteil auf, daß sie auch unter bestehender Bebauung angewendet werden kann, und zwar bei voller Aufrechterhaltung der Bausubstanz.

In weiterer Ausgestaltung der Erfindung ist es möglich, den Abbau der Schadstoffe noch zu steigern bzw. zu verbessern. Dies erfolgt durch Verwendung von sog. Biomasse, die über einen entsprechenden Anschluß dem Leitungssystem für den Spül- und Schneidstrahl zugegeben wird, so daß es hierdurch möglich ist, die durch den Spül- und Schneidstrahl herausgelöste kontaminierte Bodenmasse im vorgebenen gewünschten Umfang gleichmäßig mit der Biomasse zu durchmischen. Diese Biomasse besteht im wesentlichen aus Mikroorganismen, die an die abzubauenden Schadstoffe des kontaminierten Bodens angepaßt sind, und zwar derart, daß die betreffenden Schadstoffe abgebaut bzw. umgewandelt und dadurch in der erwünschten Weise vernichtet werden.

Es liegt im Rahmen der Erfindung, die Biomasse dem nachgereinigten Boden kurz vor bzw. bei seiner Rückspülung in die Bohrung beizumischen, wobei diese Beimischung zusätzlich zur Zugabe von Biomasse zum Spül- und Schneidstrahl oder stattdessen erfolgen kann.

Diese Beimischung von Biomasse zum nachgereinigten Boden erfolgt zweckmäßigerweise über eine zusätzliche Leitung, die den Anschluß für die Zugabe von Biomasse mit dem Leitungssystem zur Rückförderung des nachgereinigten Bodens in die Bohrung verbindet.

Die Erfindung wird im folgenden anhand der Zeichnung näher erläutert. Diese zeigt in:

Fig. 1 Das Verfahren und die Vorrichtung in schematischer Darstellung, teilweise im Längsschnitt, und

Fig. 2 eine abgewandelte Ausführungsform hiervon.

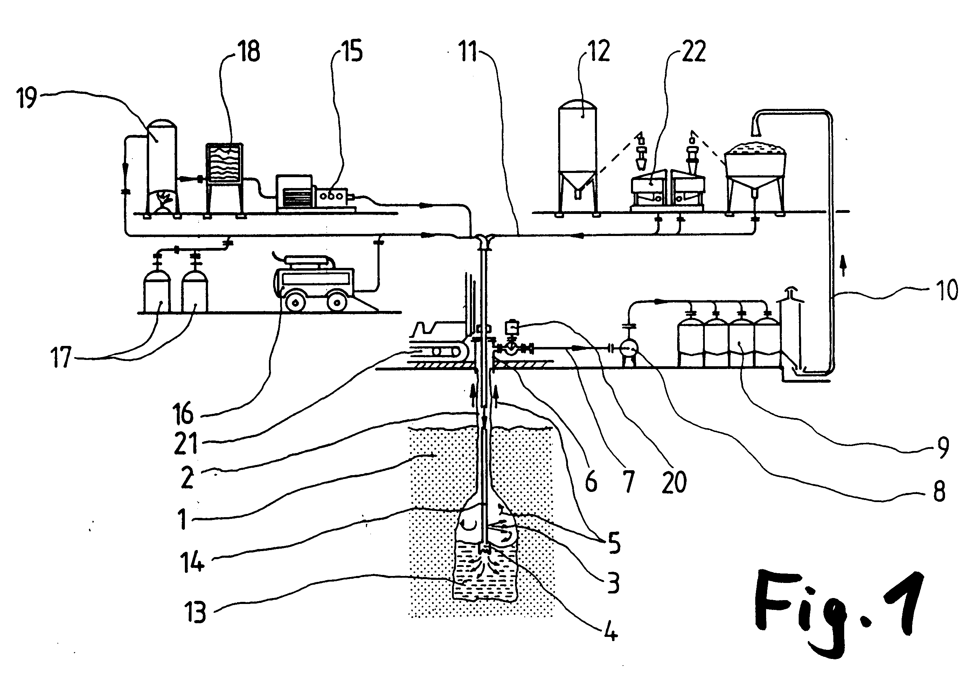

Wie aus Fig. 1 ersichtlich, wird in den kontaminierten Boden 1 eine vertikale oder ansonsten je nach den Umständen geneigte Bohrung 2 abgeteuft, und zwar mittels eines Bohrgerätes 21. In dieser Bohrung 2 wird sodann eine Schneideinrichtung 4 angeordnet, die über ein Leitungssystem 14 mittels einer Hochdruckpumpe 15 antreibbar ist und in der Bohrung 2 heb- und senkbar sowie drehbar angeordnet ist. Die Schneideinrichtung 4 erzeugt an ihrem unteren Ende einen energiereichen Spül- und Schneidstrahl 3. Durch diesen wird der kontaminierte Boden 1 aus seinem Verbund herausgelöst und so intensiv durchspült, daß er zum größten Teil von den anhaftenden Schadstoffen befreit wird.

In dem sich zur Oberfläche ergebenden Rückstrom 5 wird der Feinanteil des durchspülten und vorgereinigten Bodens zusammen mit den gelösten Schadstoffen als Boden-Spül-Gemisch 7 durch einen Preventer 6 geschleust und durch eine Pumpe 8 zu einer Reinigungsanlage 9 - zum Zweck der Nachbehandlung - gefördert. In dieser Reinigungsanlage 9 wird der Bodenfeinanteil von den restlichen Schadstoffen befreit, während der Grobanteil des Bodens im Behandlungsbereich verbleibt.

Der in der Reinigungsanlage 9 nachgereinigte Boden 10 wird über ein entsprechendes Leitungssystem 11 unter Zugabe von Bindemitteln 12, beispielsweise von Zement, in die Bohrung 2 zurückgefördert und bildet dort eine tragfähige Bodenstruktur 13 aus.

Wie ersichtlich, erfolgt die Zugabe des Bindemittels 12 an einer Mischanlage 22, die der dosierten Zugabe des Bindemittels 12 zum nachgereinigten Boden 10 sowie der Mischung dieser beiden Bestandteile dient.

Wie weiterhin aus der Zeichnung ersichtlich, sind in der Saugleitung des Leitungssystems 14 der Hochdruckpumpe 15 Anschlüsse für Luft 16, Gas 17, heißes Waser 18 und Dampf 19 angeordnet, um hierdurch den Vorgang der Dekontaminierung des Bodens 1 zu unterstützen.

Schließlich ist eine Meß- und Regelanlage 20 vorgesehen, die beim dargestellten Ausführungsbeispiel dem Preventer 6 nachgeschaltet ist und dazu dient, im Rückstrom 5 das jeweilige Ausmaß der Befreiung des kontaminierten Bodens 1 von Schadstoffen stetig festzustellen, zu kontrollieren und zu regeln. Dieser Vorgang wird solange fortgesetzt, bis der gewünschte Dekontaminationsgrad bei voller Tragfähigkeit des Bodens erreicht ist.

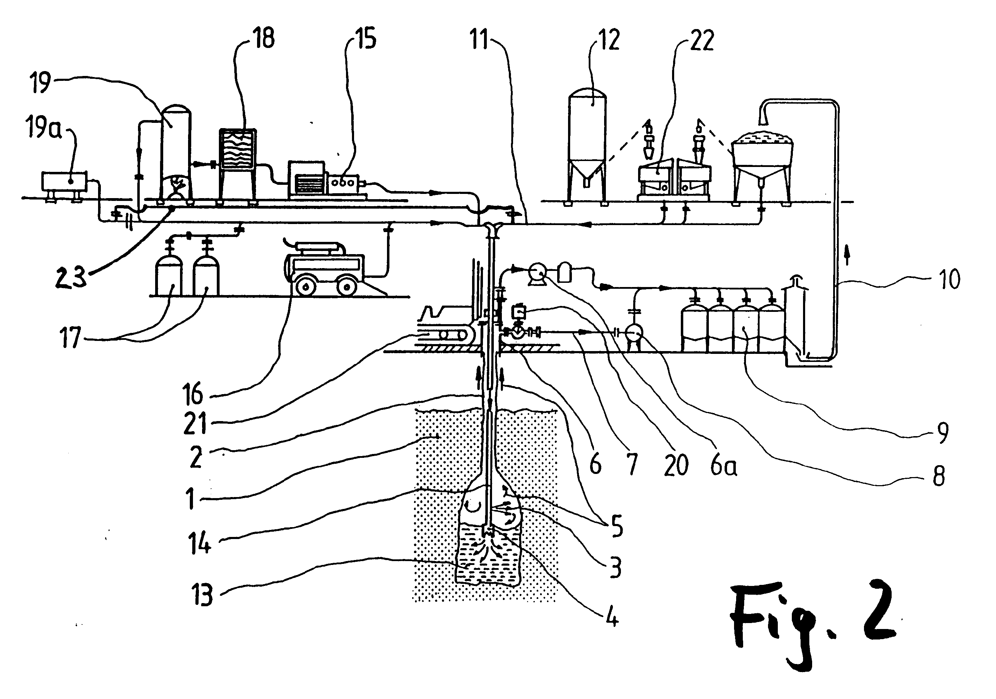

Die abgewandelte Ausführungsform gemäß Fig. 2 unterscheidet sich von derjenigen gemäß Fig. 1 u. a. dadurch, daß an den Preventer 6 eine Vakuumpumpe 6a angeschlossen ist, die den Preventer 6 unter Vakuum bzw. Unterdruck setzt. Dadurch werden die im Rückstrom 5 enthaltenen Schadstoffe stets nach innen gesaugt und können somit nicht in die Atmosphäre austreten. Auf diese Weise werden das Baustellenpersonal und die Umwelt vor den Schadstoffen geschützt. Gleichzeitig bewirkt der im Preventer 6 herrschende Unterdruck, daß der Transport des Rückstroms 5 aus der Bohrung 2 vergleichförmigt wird und somit keinen Störungen unterliegt.

Außerdem ist in dem Leitungssystem 14 ein Anschluß für die Zugabe von Biomasse 19a vorgesehen. Hierdurch ist es möglich, dem verunreinigten Boden 1 beim Herauslösen Biomasse 19a in der gewünschten Menge, Konzentration usw. zuzugeben, wobei gleichzeitig aufgrund des Spül- und Schneidstrahls 3 eine gleichmäßige Durchmischung erfolgt, so daß die Biomasse 19a im verunreinigten Boden 1 ihre volle Wirkung entfalten und die Schadstoffe biochemisch abbauen bzw. umwandeln kann.

Der für die Zugabe von Biomasse 19a vorgesehene Anschluß ist außerdem über eine zusätzliche Leitung 23 mit dem zur Rückförderung des nachgereinigten Bodens 10 in die Bohrung 2 dienenden Leitungssystem 11 verbunden. Hierdurch ist es möglich, die Biomasse 19a auch dem nachgereinigten Boden 10 beizumischen, und zwar kurz vor bzw. bei dessen Rückspülung in die Bohrung 2.

Bezüglich weiterer, vorstehend nicht beschriebener Merkmale des Verfahrens sowie der Vorrichtung wird im übrigen ausdrücklich auf die Zeichnung verwiesen.

**Patentansprüche**

1. Verfahren zur Sanierung kontaminierter Standorte durch Extraktion des verunreinigten Bodens (1) Entzug der Schadstoffe sowie Wiederablagerung des gereinigten Bodens im sanierten Standort, **dadurch gekennzeichnet,**
   - daß der verunreinigte Boden (1) durch einen Hochdruckspül- und -schneidstrahl (3) einer in einer vertikalen oder gegen die Vertikale geneigten Bohrung (2) angeordneten, heb- und senkbaren sowie drehbaren Schneideinrichtung (4) vorgereinigt wird, wobei er aus seinem Verband herausgelöst und so intensiv durchspült wird, daß er zum größten Teil von den anhaftenden Schadstoffen befreit wird,
   - daß der Feinanteil des durchspülten und vorgereinigten Bodens zusammen mit den Schadstoffen als Boden-Spül-Gemisch (7) im Rückstrom (5) durch einen Preventer (6) geschleust und zur Nachbehandlung zu einer Reinigungsanlage (9) gefördert wird, in der er von den restlichen Schadstoffen befreit wird, während der Grobanteil des Bodens im Behandlungsbereich verbleibt, und
   - daß der in der Reinigungsanlage (9) nachgereinigte Boden (10) unter Zugabe von Bindemittel (12), beispielsweise Zement, in die Bohrung (2) zurückgespült wird und dort eine tragfähige Bodenstruktur (13) ausbildet.

2. Verfahren nach Anspruch 1, dadurch gekennzeichnet, daß dem Spül- und Schneidstrahl (3) zur Verstärkung der Vorreinigung des kontaminierten Bodens (1) heißes Wasser (18) und/oder Dampf (19) beigemischt werden.

3. Verfahren nach Anspruch 1 oder 2, dadurch gekennzeichnet, daß dem Spül- und Schneidstrahl (3) Luft (16) und/oder Gas (17) beigemischt werden, um den kontaminierten Boden (1) von gasförmigen Giften zu reinigen.

4. Verfahren nach einem der Ansprüche 1 bis 3, dadurch gekennzeichnet, daß alle Vorgänge zur Dekontaminierung des Bodens (1) durch eine Meß- und Regelanlage (20) kontrolliert und geregelt werden.

5. Verfahren nach einem der Ansprüche 1 bis 4, dadurch gekennzeichnet, daß der Vorgang der Dekontaminierung des Bodens (1) solange fortgesetzt wird, bis der vorgesehene Dekontaminationsgrad des Bodens bei dessen voller Tragfähigkeit erreicht ist.

6. Verfahren nach einem der Ansprüche 1 bis 5, dadurch gekennzeichnet, daß der im Rückstrom (5) angeordnete Preventer (6) zum Ansaugen der Schadstoffe unter Unterdruck gesetzt wird.

7. Verfahren nach einem der Ansprüche 1 bis 6, dadurch gekennzeichnet, daß zum verstärkten Abbau der im kontaminierten Boden (1) enthaltenen Schadstoffe Biomasse (19a) zugegeben wird, die dem Spül- und Schneidstrahl (3) und/oder dem nachgereinigten Boden (10) vor bzw. bei seiner Rückspülung in die Bohrung (2) beigemischt wird.

8. Vorrichtung zur Durchführung des Verfahrens nach einem der Ansprüche 1 bis 7, mit einer von einer Hochdruckpumpe (15) angetriebenen Schneideinrichtung (4), die in einer Bodenbohrung (2) heb- und senkbar sowie drehbar vorgesehen und über ein Leitungssystem (11) mit einer Mischanlage (22) zur Zugabe von Bindemittel (12) verbunden ist, **dadurch gekennzeichnet,** daß die Schneideinrichtung (4) einen Hochdruckspül- undschneidstrahl (3) zur Vorreinigung des kontaminierten Bodens (1) erzeugt, daß im Rückstrom (5) ein Preventer (6) vorgesehen ist, daß eine Reinigungsanlage (9) zur Nachbehandlung des als Boden-Spül-Gemisch im Rückstrom (5) herausgeschleusten Bodenanteils vorgesehen ist, wobei der nachgereinigte Boden (10) zusammen mit dem Bindemittel (12) über das Leitungssystem (11) in die Bohrung (2) zurückförderbar ist, und daß zur Überwachung der Vorrichtung eine Meß- und Regelanlage (20) vorgesehen ist.

9. Vorrichtung nach Anspruch 8, dadurch gekennzeichnet, daß das Leitungssystem (14) der die Schneideinrichtung (4) antreibenden Hochdruckpumpe (15) Anschlüsse für die Zugabe von heißem Wasser (18) und/oder Dampf (19) und/oder Luft (16) und/oder Gas (17) aufweist.

10. Vorrichtung nach Anspruch 8 oder 9, dadurch gekennzeichnet, daß an den Preventer (6) eine Vakuumpumpe (6a) angeschlossen ist, die den Preventer (6) unter Vakuum bzw. Unterdruck setzt.

11. Vorrichtung nach einem der Ansprüche 8 bis 10, dadurch gekennzeichnet, daß das Leitungssystem (14) der die Schneideinrichtung (4) antreibenden Hochdruckpumpe (15) einen Anschluß für die Zugabe von Biomasse (19a) aufweist.

12. Vorrichtung nach Anspruch 11, dadurch gekennzeichnet, daß der Anschluß für die Zugabe von Biomasse (19a) über eine zusätzliche Leitung (23) mit dem Leitungssystem (11) zur Rückförderung des nachgereinigten Bodens (10) in die Bohrung (2) verbunden ist.

## Claims

1. Process for the sanitation of contaminated sites by extraction of the contaminated soil (1), removal of the noxious substances and redeposition of the purified soil at the site subjected to sanitation, **characterised in that**
   -the contaminated soil (1) is prepurified by means of a high-pressure flushing and cutting jet (3) of a cutting device (4), which can be raised and lowered as well as rotated and is arranged within a vertical borehole (2) or in a borehole inclined in respect to the vertical, whereby said contaminated soil (1) is separated out from its surrounding matter and flushed through with such intensity as to cleanse it of by far the largest part of the noxious substances adhering to it,
   - in that the fine portion of the flushed and prepurified soil is passed, together with the noxious substances, as a mixture of soil and flushing agent (7) in backflow (5) through a preventer (6) and conveyed for further treatment to purification plant (9) in which it is cleansed of the remaining noxious substances while the coarse portion of the soil remains within the treatment zone, and
   - in that the soil (10) repurified in purification plant (9) is flushed back into borehole (2) subject to the addition of bonding agent (12) such as cement, and in that it forms a ground structure (13) capable of bearing loads within said borehole (2).

2. Process according to claim 1, characterised in that, with a view to intensifying the prepurification of the contaminated soil (1), hot water (18) and/or steam (19) are supplied to flushing and cutting jet (3).

3. Process according to claim 1 or 2, characterised in that air (16) and/or gas (17) are supplied to flushing and cutting jet (3), with a view to cleansing the contaminated soil (1) of gaseous toxins.

4. Process according to one of claims 1 to 3, characterised in that all operations for decontaminating soil (1) are monitored and controlled by means of a metering and control system (20).

5. Process according to one of claims 1 to 4, characterised in that the operation of decontaminating the soil (1) is continued until the soil has been decontaminated to the required degree while fully maintaining the bearing capacity of the ground.

6. Process according to one of claims 1 to 5, characterised in that the preventer (6) arranged in backflow (5) is subjected to negative pressure with a view to aspirating the noxious substances.

7. Process according to one of claims 1 to 6, characterised in that biomass (19a) is added with a view to intensifying the removal of the noxious substances contained in contaminated soil (1), said biomass (19a) being supplied to flushing and cutting jet (3) and/or repurified soil (10) before or in the course of its return by flushing into borehole (2).

8. Apparatus for carrying out the process according to one of claims 1 to 7, comprising a cutting device (4) driven by means of a high-pressure pump (15), whereby said cutting device (4) is provided within a borehole (2) in the ground in such a manner that it can be raised and lowered as well as rotated and whereby said cutting device (4) is connected via a conduit system (11) with a mixing plant (22) for adding bonding agent (12), **characterised in that** cutting device (4) produces a high-pressure flushing and cutting jet (3) for prepurifying the contaminated soil (1), in that a preventer (6) is provided in backflow (5), in that a purification plant (9) for further treatment of the portion of soil passed out in backflow (5) as a mixture of soil and flushing agent is provided, whereby the repurified soil (10) can be returned together with bonding agent (12) via conduit system (11) into borehole (2), and in that a metering and control system (20) is provided for monitoring the apparatus.

9. Apparatus according to claim 8, characterised in that conduit system (14) of high-pressure pump (15) driving cutting device (4) has connections for adding hot water (18) and/or steam (19) and/or air (16) and/or gas (17).

10. Apparatus according to claim 8 or 9, characterised in that a vacuum pump (6a) is connected with preventer (6), whereby said vacuum pump (6a) subjects the preventer (6) to a vacuum or negative pressure.

11. Apparatus according to one of claims 8 to 10, characterised in that conduit system (14) pertaining to high-pressure pump (15) driving the cutting device (4) has a connection for the addition of biomass (19a).

12. Apparatus according to claim 11, characterised in that the connection for adding biomass (19a) is connected via an additional conduit (23) with conduit system (11) for returning the repurified soil (10) into borehole (2).

## Revendications

1. Procédé d'assainissement de sites contaminés par extraction du sol contamine (1), extraction des produits nocifs et remise en place du sol épuré dans le site assaini, caractérisé
   - en ce que le sol contaminé (1) est préalablement épuré par un jet haute pression de curage et de coupe (3) d'un dispositif de coupe (4) qui est disposé dans un perçage (2) vertical ou incliné par rapport à la verticale, peut être levé et abaissé et est rotatif, ledit sol étant détaché du reste du sol et lavé si intensément qu'il est libéré de la plus grande partie des produits nocifs qui y adhérent,
   - en ce que les éléments fins du sol lavé et épuré préalablement associés aux produits nocifs pour former un mélange de curage du sol (7) passent dans le reflux (5) par un obturateur (6) et sont amenés en vue d'un traitement ultérieur vers une installation d'épuration (9) dans laquelle ils sont libérés des produits nocifs restants tandis que les éléments gros du sol restent dans la zone de traitement, et
   - en ce que le sol (10) ayant subi l'épuration ultérieure dans l'installation d'épuration (9) est ramené, avec addition de liants (12), par exemple de ciment, dans le perçage (2) et y forme une structure de sol solide (13).

2. Procédé selon la revendication 1, caractérisé en ce que de l'eau chaude (18) et/ou de la vapeur (19) sont mélangées au jet de curage et de coupe (3) pour renforcer l'épuration préalable du sol contaminé (1).

3. Procédé selon la revendication 1 ou 2, caractérisé en ce que de l'air (16) et/ou du gaz (17) sont mélangés au jet de curage et de coupe (3) afin d'éliminer les gaz toxiques du sol contaminé (1).

4. Procédé selon l'une des revendications 1 à 3, caractérisé en ce que toutes les opérations de décontamination du sol (1) sont contrôlées et réglées par une installation de mesure et de réglage (20).

5. Procédé selon l'une des revendications 1 à 4, caractérisé en ce que l'opération de décontamination du sol (1) est prolongée jusqu'à ce que le degré de décontamination du sol prévu soit atteint en lui assurant une solidité parfaite.

6. Procédé selon l'une des revendications 1 à 5, caractérisé en ce qu'une dépression est créée dans l'obturateur (6) disposé dans le reflux (5) pour aspirer les produits nocifs.

7. Procédé selon l'une des revendications 1 à 6, caractérisé en ce qu'en vue d'une dégradation renforcée des produits nocifs contenus dans le sol contaminé (1), on ajoute une biomasse (19a) qui est mélangée au jet de curage et de coupe (3) et/ou au sol (10) ayant subi le traitement ultérieur avant ou au moment où il est ramené dans le perçage (2).

8. Dispositif de mise en oeuvre du procédé selon l'une des revendications 1 à 7, comprenant un dispositif de coupe (4) qui est entraîné par une pompe haute pression (15), est prévu dans un perçage du sol (2) de manière à pouvoir être levé et abaissé et à effectuer une rotation et est relié par un système de conduites (11) à un mélangeur (22) destiné à l'addition de liants (12), caractérisé en ce que le dispositif de coupe (4) produit un jet haute pression de curage et de coupe (3) pour l'épuration préalable du sol contaminé (1), en ce qu'un obturateur (6) est prévu dans le reflux (5) en ce qu'une installation d'épuration (9) est prévue pour le traitement ultérieur de la partie du sol évacuée dans le reflux (5) sous forme de mélange de curage du sol, le sol (10) ayant subi le traitement ultérieur pouvant être ramené avec le liant (12) dans le perçage (2) par le système de conduites (11) et en ce qu'une installation de mesure et de réglage (20) est prévue pour surveiller le dispositif.

9.  Dispositif selon la revendication 8, caractérisé en ce que le système de conduites (14) de la pompe haute pression (15) qui entraîne le dispositif de coupe (4) présente des raccordements pour l'addition d'eau chaude (18) et/ou de vapeur (19) et/ou d'air (16) et/ou de gaz (17).

10. Dispositif selon la revendication 8 ou 9, caractérisé en ce qu'une pompe à vide (6a) est raccordée à l'obturateur (6) pour créer un vide ou une dépression dans l'obturateur (6).

11. Dispositif selon l'une des revendications 8 à 10, caractérisé en ce que le système de conduites (14) de la pompe haute pression (15) qui entraîne le dispositif de coupe (4) présente un raccordement pour l'addition de biomasse (19a).

12. Dispositif selon la revendication 11, caractérisé en ce que le raccordement pour l'addition de biomasse (19a) est relié par une conduite supplémentaire (23) au système de conduites (11) destiné à ramener dans le perçage (2) le sol (10) ayant subi le traitement ultérieur.

Fig. 1

Fig. 2